# EUROPEAN PATENT APPLICATION

(11) **EP 4 831 030 A1**
(43) Date of publication of application: **28.10.2026**
(21) Application number: 25214564.4
(22) Date of filing: 10.11.2025
(51) Int. Cl.: B60W 60/00

(54) **VEHICLE AND CONTROL METHOD THEREOF**

(30) Priority: 23.04.2025 KR 20250052960
(71) Applicant: Hyundai Motor Company, Seoul 06797 (KR); Kia Corporation, Seoul 06797 (KR)
(72) Inventor: LEE, Jin Ug, 18280 Hwaseong-si, Gyeonggi-do (KR); PARK, Jong Sung, 18280 Hwaseong-si, Gyeonggi-do (KR); CHOI, Ji Am, 18280 Hwaseong-si, Gyeonggi-do (KR); KIM, Dong Sun, 18280 Hwaseong-si, Gyeonggi-do (KR); KIM, Su Hyun, 18280 Hwaseong-si, Gyeonggi-do (KR)
(74) Representative: Viering, Jentschura & Partner mbB Patent- und Rechtsanwälte

(57) **Abstract**

The present disclosure provides a vehicle and control method thereof. A control device according to an example of the present disclosure comprises a memory; and a processor electrically or adaptively coupled to the memory, wherein the processor may be configured to determine an entry distance to a system boundary and a speed of a vehicle, based on a determination that the vehicle is approaching the system boundary during driving control by an autonomous driving system, and determine whether to output a notification based on the entry distance and the speed of the vehicle.

## Description

### CROSS-REFERENCE TO RELATED APPLICATION

This application claims the benefit of priority to Korean Patent Application No. 10-2025-0052960, filed on April 23, 2025, the disclosure of which is incorporated herein by reference in its entirety.

### TECHNICAL FIELD

Various examples of the present disclosure relate to techniques for more efficiently operating autonomous driving.

### BACKGROUND

Autonomous driving systems are designed to operate normally only under specific conditions, and manufacturers may define the limitations and conditions of such systems and specify the limitations and conditions as System Boundaries.

However, autonomous driving systems may have a problem in that they output a notification when approaching a system boundary regardless of the vehicle speed, such that when the vehicle speed is high, a driver does not have sufficient time to respond, or when the vehicle speed is low, the notification is displayed to the driver unnecessarily early.

### SUMMARY

The technical problem to be solved by the present disclosure has been devised to solve the above-described problems, and aims to provide a dynamic notification to a driver by considering a speed of a vehicle and an entry distance to a system boundary.

The problems to be solved by the present disclosure are not limited to the problems mentioned above, and other problems not mentioned will be clearly understood by those of ordinary skill in the art from the following description.

According to the present disclosure, an apparatus of a vehicle may comprise a sensor, a processor, and a memory storing at least one instruction that, when executed by the processor communicating with the memory, is configured to cause the apparatus to, based on sensor data obtained from the sensor during autonomous driving of the vehicle, detect that the vehicle is approaching a system boundary at which the autonomous driving of the vehicle is limited, determine, based on the detection, an entry distance to the system boundary and a speed of the vehicle, generate, based on the determined entry distance and the determined speed of the vehicle, a signal indicating whether to output a notification to a driver of the vehicle, and adjust, based on the signal, the autonomous driving of the vehicle.

The at least one instruction, when executed by the processor communicating with the memory, may be configured to cause the apparatus to, based on the determined speed of the vehicle and an expected response time of the driver, determine an expected response travel distance of the driver, and based on the determined entry distance and the determined expected response travel distance, determine whether to output the notification.

The at least one instruction, when executed by the processor communicating with the memory, may be configured to cause the apparatus to output the notification based on a remaining distance being less than or equal to the determined expected response travel distance, wherein the remaining distance is obtained by subtracting a predetermined safety distance from the determined entry distance.

The at least one instruction, when executed by the processor communicating with the memory, may be configured to cause the apparatus to hold off outputting of the notification based on a remaining distance exceeding the determined expected response travel distance, wherein the remaining distance is obtained by subtracting a predetermined safety distance from the determined entry distance.

The at least one instruction, when executed by the processor communicating with the memory, may be configured to cause the apparatus to, based on vehicle congestion being identified on an autonomous driving route according to a destination of the vehicle, determine whether to output the notification by comparing a remaining distance with the determined expected response travel distance, wherein the remaining distance is obtained by subtracting a congestion distance and a safety distance from the determined entry distance.

The at least one instruction, when executed by the processor communicating with the memory, may be configured to cause the apparatus to, after outputting the notification, stepwise output one or more additional notifications having a first form different from a second form of the notification.

The at least one instruction, when executed by the processor communicating with the memory, may be configured to cause the apparatus to, after outputting the notification, stepwise output one or more additional notifications having a first intensity different from a second intensity of the notification.

The at least one instruction, when executed by the processor communicating with the memory, may be configured to cause the apparatus to terminate autonomous driving of the vehicle based on a predetermined response of the driver to the notification.

The predetermined response may comprise at least one of an input for disengaging autonomous driving of the vehicle, or a braking input for braking the vehicle.

The at least one instruction, when executed by the processor communicating with the memory, may be configured to cause the apparatus to control braking of the vehicle based on detecting a non-response from the driver for a predetermined period of time after the notification is output.

The at least one instruction, when executed by the processor communicating with the memory, may be configured to cause the apparatus to control the braking of the vehicle by performing at least one of decelerating the vehicle, stopping the vehicle within a lane, or stopping the vehicle after a lane change.

According to the present disclosure, a method may be performed by an apparatus of a vehicle. The method may comprise, based on sensor data obtained from a sensor during autonomous driving of the vehicle, detecting that the vehicle is approaching a system boundary at which the autonomous driving of the vehicle is limited, determining, based on the detecting, an entry distance to the system boundary and a speed of the vehicle, generating, based on the determined entry distance and the determined speed of the vehicle, a signal indicating whether to output a notification to a driver of the vehicle, and adjusting, based on the signal, the autonomous driving of the vehicle.

According to the present disclosure, a vehicle may comprise a sensor configured to detect information comprising a position of the vehicle and a speed of the vehicle, a driving control circuit configured to control autonomous driving of the vehicle, and a processor circuit configured to cause the vehicle to determine, based on the detected information, an entry distance to a system boundary at which autonomous driving of the vehicle is limited and the speed of the vehicle, obtain a driver response time associated with a driver of the vehicle, wherein the driver response time corresponds to a predicted time interval between a takeover request and the driver taking over autonomous driving of the vehicle, determine a driver response distance as a product of the speed of the vehicle and the driver response time, based on the entry distance being less than or equal to the driver response distance, output the takeover request to the driver, and based on an absence of a driver response to the takeover request within a preset time threshold, activate, via the driving control circuit, a minimum risk maneuver operation during autonomous driving of the vehicle.

The processor circuit may be configured to obtain the driver response time by at least one of retrieving a prestored default value, referencing driver profile information, or estimating the driver response time based on driver-monitoring sensor data.

The processor circuit may be configured, based on the absence of the driver response, to activate the minimum risk maneuver operation by at least one of decelerating the vehicle, stopping the vehicle within a lane, or stopping the vehicle after a lane change.

The processor circuit may be configured to output the takeover request in at least one of a visual form, an auditory form, or a haptic form.

The processor circuit may be configured to, after outputting of the takeover request in a first form, output the takeover request in a second form based on the driver response not being detected, and after outputting of the takeover request in the second form, output the takeover request in a third form based on the driver response not being detected.

The effects of the present disclosure are not limited to the above-mentioned effects, and other unmentioned effects may be clearly understood by one of ordinary skill in the art from the description below.

### BRIEF DESCRIPTION OF THE DRAWINGS

FIG. 1 shows an example of a vehicle.
FIG. 2 shows an exemplary flowchart of a notification output related to a system boundary.
FIG. 3 shows an exemplary flowchart of a notification output related to a system boundary.
FIG. 4 shows an example of a notification output related to a system boundary.
FIG. 5 shows an example of a notification output related to a system boundary.
FIG. 6 shows an exemplary flowchart of an operation for controlling a notification or driving after a notification output.
FIG. 7 shows an example computing system.

### DETAILED DESCRIPTION

Hereinafter, preferred examples of the present disclosure will be described in detail with reference to the accompanying drawings.

However, the technical idea of the present disclosure is not limited to some examples to be described, but may be implemented in various different forms, and within the scope of the technical idea of the present disclosure, one or more of the constituent elements of the examples may be selectively combined or substituted for use.

Furthermore, the terminology used in the examples of the present disclosure (including technical and scientific terms), unless explicitly defined and described otherwise, may be interpreted as having a meaning that may be generally understood by one of ordinary skill in the art to which the present disclosure pertains, and generally used terms such as those defined in a dictionary may be interpreted in consideration of the contextual meaning in the relevant art.

Furthermore, the terminology used in the examples of the present disclosure is for describing the examples and is not intended to limit the present disclosure.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium in order to be executed on a computer. The medium may either continuously store a computer-executable program or temporarily store the program for execution or download. Furthermore, the medium may be a variety of recording or storage means in the form of a single hardware device or multiple combined hardware devices, and is not limited to media directly connected to some computer system but may also be distributed across a network. Examples of such media include magnetic media such as a hard disk, a floppy disk, or a magnetic tape, optical recording media such as a CD-ROM or a DVD, magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be activated based on configured autonomous driving control setting(s) (e.g., based on at least one of: an autonomous driving classification, a selection of an autonomous driving level for a vehicle, etc.). Based on one or more features (e.g., feature of intelligent takeover timing with adaptive driver alerts and safe fallback maneuvers) described herein, an operation of the vehicle may be controlled. The vehicle control may include various operational controls associated with the vehicle (e.g., activating visual takeover alerts on a head-up display when an entry distance to a system boundary becomes small, outputting an auditory chime that escalates to voice guidance when no driver response is detected, triggering haptic steering wheel vibration when urgency increases, or initiating safe fallback maneuvers such as controlled deceleration on a highway, lane-keeping to a shoulder in urban driving, or bringing the vehicle to a safe stop at an emergency bay, etc.).

One or more auxiliary devices (e.g., engine brake, exhaust brake, hydraulic retarder, electric retarder, regenerative brake, etc.) may also be controlled, for example, based on one or more features (e.g., feature of intelligent takeover timing with adaptive driver alerts and safe fallback maneuvers) described herein. For instance, when the driver does not respond to a takeover request, the control device may activate an engine brake or regenerative brake to smoothly decelerate, apply an exhaust brake or hydraulic retarder to maintain stability on downhill roads, or combine multiple auxiliary devices to support a safe fallback maneuver such as lane-keeping to a shoulder or bringing the vehicle to a complete stop, while simultaneously escalating driver alerts through visual, auditory, or haptic notifications.

One or more communication devices (e.g., a modem, a network adapter, a radio transceiver, an antenna, etc., that is capable of communicating via one or more wired or wireless communication protocols, such as Ethernet, Wi-Fi, near-field communication (NFC), Bluetooth, Long-Term Evolution (LTE), 5G New Radio (NR), vehicle-to-everything (V2X), etc.) may also be controlled, for example, based on one or more features (e.g., feature of intelligent takeover timing with adaptive driver alerts and safe fallback maneuvers) described herein. For instance, the control device may use V2X communication to broadcast a takeover warning to nearby vehicles, send emergency status data to roadside infrastructure during fallback maneuvers, upload driver non-response events to a cloud server for fleet management, or activate direct Wi-Fi/Bluetooth links with a driver's mobile device to reinforce urgent alerts through haptic or auditory cues.

Minimum risk maneuver (MRM) operation(s) may also be controlled, for example, based on one or more features (e.g., feature of intelligent takeover timing with adaptive driver alerts and safe fallback maneuvers) described herein. A minimal risk maneuvering operation (e.g., a minimal risk maneuver, a minimum risk maneuver) may be a maneuvering operation of a vehicle to minimize (e.g., reduce) a risk of collision with surrounding vehicles in order to reach a lowered (e.g., minimum) risk state. A minimal risk maneuver may be an operation that may be activated during autonomous driving of the vehicle when a driver is unable to respond to a request to intervene. For instance, the vehicle may decelerate smoothly while maintaining lane position on a highway, perform a controlled lane change to reach a shoulder, activate hazard lights while coming to a complete stop in traffic, or select an emergency bay or safe pull-off zone for stopping, etc. During the minimal risk maneuver, one or more processors of the vehicle may control a driving operation of the vehicle for a set period of time (e.g., applying braking control, adjusting steering angle, or coordinating with V2X communication to warn nearby vehicles, etc.).

Biased driving operation(s) may also be controlled, for example, based on one or more features (e.g., feature of intelligent takeover timing with adaptive driver alerts and safe fallback maneuvers) described herein. A driving control apparatus may perform a biased driving control. To perform a biased driving, the driving control apparatus may control the vehicle to drive in a lane by maintaining a lateral distance between the position of the center of the vehicle and the center of the lane.

For example, the driving control apparatus may control the vehicle to stay in the lane but not in the center of the lane (e.g., shifting slightly to the left or right to increase clearance from a large truck, a roadside barrier, or a bicyclist, etc.). The driving control apparatus may identify or determine a biased target lateral distance for biased driving control. For example, a biased target lateral distance may comprise an intentionally adjusted lateral distance that a vehicle may aim to maintain from a reference point, such as the center of a lane or another vehicle, during maneuvers such as lane changes. This may include keeping extra distance from merging vehicles in dense traffic, positioning further from construction barriers, or aligning closer to the center line to avoid obstacles on the road shoulder, etc.

This adjustment may be made to improve the vehicle's stability, safety, and/or performance under varying driving conditions. For example, during a lane change, the driving control system may bias the lateral distance to keep a safer gap from adjacent vehicles, considering factors such as the vehicle's speed, road conditions, and/or the presence of obstacles (e.g., potholes, debris, or uneven pavement, etc.).

In addition, during a minimum risk maneuver, biased driving may be applied to guide the vehicle toward a safer stopping position, such as biasing toward a road shoulder during an emergency stop, positioning closer to a lane boundary to prepare for a controlled lane exit, or centering within a narrow lane to maximize clearance from roadside hazards before stopping.

One or more sensors (e.g., IMU sensors, camera, LIDAR, RADAR, blind spot monitoring sensor, line departure warning sensor, parking sensor, light sensor, rain sensor, traction control sensor, anti-lock braking system sensor, tire pressure monitoring sensor, seatbelt sensor, airbag sensor, fuel sensor, emission sensor, throttle position sensor, inverter, converter, motor controller, power distribution unit, high-voltage wiring and connectors, auxiliary power modules, charging interface, etc.) may also be controlled, for example, based on one or more features (e.g., feature of intelligent takeover timing with adaptive driver alerts and safe fallback maneuvers) described herein. For instance, sensor outputs may be prioritized or combined when the system determines that a takeover notification is likely, such as increasing the weight of LIDAR and RADAR data in foggy weather, activating blind spot monitoring to support a safe fallback lane change, or monitoring a seatbelt sensor and steering wheel grip sensor to assess whether a driver is ready to respond.

An operation control for autonomous driving of the vehicle may include various driving control of the vehicle by the vehicle control device (e.g., acceleration, deceleration, steering control, gear shifting control, braking system control, traction control, stability control, cruise control, lane keeping assist control, collision avoidance system control, emergency brake assistance control, traffic sign recognition control, adaptive headlight control, etc.). These operations may be dynamically adjusted in coordination with takeover timing, such as reducing acceleration and applying stability control before issuing a takeover request, activating adaptive headlights and collision avoidance simultaneously during a late-night fallback maneuver, or applying traction control and emergency braking together during icy road conditions to secure a safe stop.

An autonomous driving activation/deactivation operation may be controlled based on the feature of intelligent takeover timing with adaptive driver alerts and safe fallback maneuvers described herein. In particular, a control apparatus may monitor a system boundary and dynamically determine when to request driver takeover by calculating an entry distance, a driver's expected response time, and a response travel distance. When sufficient margin exists (e.g., the entry distance is greater than the response travel distance), autonomous driving may be maintained without issuing a notification. When the margin becomes limited (e.g., the entry distance is close to the response travel distance), adaptive driver alerts may be provided stepwise (e.g., visual icons, auditory warnings, or haptic feedback) to prepare the driver for takeover. When the margin is insufficient or a driver response is not detected, autonomous driving may be deactivated and a minimum risk maneuver may be initiated (e.g., controlled deceleration, lane-keeping to shoulder, or safe stop), while issuing a warning to ensure driver awareness and maintain safety.

These terms are only for distinguishing a constituent element from other constituent elements, and the essence, order, or sequence of the constituent element is not limited by the terms.

And, when a constituent element is described as being 'connected', 'coupled', or 'joined' to another constituent element, it may include not only a case where the constituent element is directly connected, coupled, or joined to the other constituent element, but also a case where it is 'connected', 'coupled', or 'joined' via another constituent element between the constituent element and the other constituent element.

Furthermore, when described as being formed or disposed "on (top of) or under (below)" each constituent element, "on (top of) or under (below)" includes not only a case where the two constituent elements are in direct contact with each other, but also a case where one or more other constituent elements are formed or disposed between the two constituent elements. In addition, when expressed as "on (top of) or under (below)", it may include the meaning of not only an upward direction but also a downward direction with respect to one constituent element.

In the various flowcharts of this document, at least some of each step may be omitted or the mutual order thereof may be changed, and at least some of the various examples of this document may be performed at a specific point in time of each step of the flowcharts. The operations of the various flowcharts of this document may be performed by at least one of the CONTROL DEVICE 100, the PROCESSOR 130, or the VEHICLE 10. In addition, redundant content in the drawings of this document may be omitted.

'Autonomous driving system' or 'driver control assistance system' referred to in this document means hardware and software that may assist a driver in continuously controlling the longitudinal and lateral movements of a vehicle. Such a driver control assistance system may be referred to as a 'system' in this document.

'Feature' referred to in this document may mean a function of a specific system that provides assistance to a driver in a defined traffic scenario, situation, and system boundary.

'Dynamic Control' referred to in this document may mean performing operational and tactical functions required to move a vehicle in real time. This may include controlling the lateral and longitudinal movements of the vehicle, monitoring the road environment, responding to events in the road traffic environment, planning operations, and signaling.

'System Boundaries' referred to in this document may mean a verifiable or measurable limit or condition set by a manufacturer, to or within a condition that affects a system or a feature of the system designed to provide assistance to a driver and the ability of the system to operate as intended.

According to the present disclosure, an autonomous driving control technique is provided that outputs a driver notification in a manner dynamically adapted to driving conditions. In particular, when a vehicle approaches a system boundary at which autonomous driving operation may no longer be guaranteed, an apparatus determines an entry distance to the system boundary and the speed of the vehicle, and determines an expected response travel distance of the driver. Based on these parameters, the apparatus determines whether and when to output a notification, thereby allowing the driver sufficient time to assume control at high speeds while avoiding unnecessarily early alerts at low speeds. If the driver does not respond to the notification, additional notifications of different form or intensity may be output, and braking control may be executed to safely decelerate or stop the vehicle.

Hereinafter, examples will be described in detail with reference to the accompanying drawings, but regardless of the drawing reference numerals, identical or corresponding constituent elements are given the same reference numbers, and redundant descriptions thereof will be omitted.

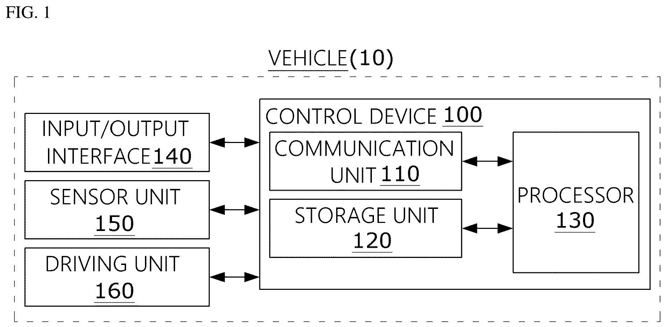

FIG. 1 shows an example of a vehicle 10 according to an example.

The vehicle 10 may include a control device 100, a communication unit 110, a memory 120, a processor 130, an input/output interface 140, a senser unit 150, and a driving unit 160. Each of these components of FIG. 1 may be implemented inside the vehicle.

The control device 100 may be formed integrally with the internal components of the vehicle, and may be implemented as a separate device independent from other components inside the vehicle 10 to communicate with the internal components of the vehicle through various connection means (e.g., a CAN bus, a wireless network, a wired connection, , or optical fiber, etc.). The control device 100 controls the vehicle by including the communication unit 110, the memory 120, and the processor 130, and may additionally include other components such as the input/output interface 140, the senser unit 150, and the driving unit 160 to perform complex control functions according to the driving situation.

The communication unit 110 may perform communication with other control devices inside the vehicle to share data between systems, or may transmit and receive various information through connection with the outside of the vehicle. The communication unit 110 transmits control signals and data between internal components using various in-vehicle communication methods such as CAN communication and Ethernet, and may interwork driving information and external data in real time through communication with a user terminal, other vehicles (V2V: Vehicle-to-Vehicle), infrastructure (V2I: Vehicle-to-Infrastructure), or an external server (e.g., a cloud server, a roadside unit, or a fleet management platform, etc.).

The communication unit 110 may perform functions for Short-range communication, GPS signal reception, V2X communication (Vehicle-to-Everything), optical communication, and broadcast transmission/reception, and ITS (Intelligent Transport Systems) communication, and may support stable data transmission at a short range using wireless communication technologies such as Bluetooth, RFID (Radio Frequency Identification), IrDA (Infrared Data Association), UWB (Ultra Wideband), ZigBee, NFC (Near Field Communication), Wi-Fi, Wi-Fi Direct, and Wireless USB. Furthermore, the communication unit 110 may include a mobile communication module based on a mobile communication network (e.g., LTE, 5G, or 6G, etc.) and a wireless internet module for wireless internet access to receive real-time data through long-distance communication, and may improve the performance of the autonomous driving system by interworking with the cloud (e.g., for high-definition map updates, over-the-air software upgrades, or real-time traffic analysis, etc.).

The storage unit 120 may include various types of memory capable of storing data, and may be integrated into the control device 100 or the processor 130, or may be configured in the form of a separate module. The storage unit 120 may include non-volatile memory (e.g., a hard disk drive, flash memory, EEPROM, SRAM, FRAM, PRAM, MRAM, , or optical storage, etc.) and volatile memory (e.g., DRAM, SDRAM, DDR-SDRAM, , HBM, or cache memory, etc.), and by combining these, a memory system of various capacities and performances may be implemented.

The storage unit 120 may store instructions that may drive various examples of the present disclosure. These instructions, when executed by the processor 130, may be configured to determine a current speed of the vehicle 10 and an entry distance to a system boundary, and to determine whether to output a notification based on the entry distance and the speed of the vehicle (e.g., generate a warning icon, a warning sound, or a haptic alert, etc.).

According to an example, the storage unit 120 may store data related to autonomous driving of the vehicle 10 and notification output according to a system boundary.

Specifically, the storage unit 120 may store a current state of the vehicle 10, sensor data (e.g., speed, position, , acceleration, or yaw rate, etc.), response time data for each driver, and predefined conditions and parameters related to a system boundary.

In addition, the storage unit 120 may store programs and data for controlling operations of the autonomous driving system (e.g., path planning software, perception models, or fail-safe control routines, etc.).

The processor 130 communicates with various internal components of the vehicle 10 such as the communication unit 110, the storage unit 120, the input/output interface 140, the senser unit 150, and the driving unit 160 through an electrical or operational connection, and may control the operation of each component and perform data processing. The processor 130, as a central processing unit for executing instructions and calculating data, may perform vehicle control by collecting, processing, and analyzing data in real time according to the driving environment of the vehicle (e.g., road curvature, traffic congestion, weather, or pedestrian detection, etc.).

The processor 130 may be implemented in the form of hardware, software, or a combination thereof, and may perform vehicle control logic in the form of, for example, a microcontroller, an FPGA, or an ASIC. Furthermore, the processor 130 may also include a multi-processor configuration for the control of a complex autonomous driving and driver assistance system (e.g., redundant processors for safety, GPU-based accelerators for AI inference, or specialized neural network chips, etc.). Such a processor configuration may support comprehensive control and stable performance of the vehicle through execution of the autonomous driving and assistance system, sensor data processing, communication data management, and driving-related determination functions.

The input/output interface 140 serves to receive inputs related to vehicle control from a user and to deliver information on the control status of the vehicle and the system operation to the user.

The input/output interface 140 may perform a function of receiving various inputs from the user and delivering the vehicle control status to the user. The input/output interface 140 may include an input means and an output means.

The input means may include physical buttons, selection areas on a touch display, a voice recognition function, and a gesture recognition function (e.g., hand waving, finger pointing, or head nodding, etc.), through which the user may input commands such as a request to activate the autonomous driving system, function switching, or driving assistance settings (e.g., adaptive cruise control, lane change assistance, or parking assist, etc.).

The output means may include a display, an audio module (e.g., a speaker), and a haptic module, and may provide the user with information such as a state of the autonomous driving system, a control transition request notification, or whether a function is activated in a visual, auditory, or tactile form (e.g., dashboard icons, spoken voice messages, or steering wheel vibration, etc.).

In addition, the input/output interface 140 may receive a driver's input through a touchscreen, physical buttons such as switches, a voice recognition system, or biometric inputs (e.g., fingerprint, facial recognition, or eye tracking, etc.). Through this, the driver may deliver commands such as activation of an autonomous driving function, a change in a warning setting, or deactivation of a warning to the vehicle system.

The sensor unit 150 may include a plurality of sensors that support stable operation of the autonomous driving system or a driver assistance system by detecting various driving and environmental information in real time. The sensor unit 150 may measure a distance to and a speed of a surrounding object through long-range detection sensors such as a radar (RADAR: Radio Detection and Ranging) and a lidar (LIDAR: Light Detection and Ranging), and may detect an object near the vehicle 10 by including an ultrasonic sensor (e.g., for parking, blind spot detection, or low-speed maneuvering, etc.).

The sensor unit 150 may include a camera. The camera may be classified into an external camera and an internal camera. The external camera recognizes the road and the surrounding environment (e.g., lane markings, pedestrians, or traffic signs, etc.), and the internal camera may comprehensively grasp the situation inside and outside the vehicle by detecting the driver's state (e.g., gaze tracking, a steering wheel grip state, , fatigue detection, or distraction monitoring, etc.) or the indoor situation. The sensor unit 150 may collect a driver's biometric information or various environmental data by including a heart rate sensor, a pressure sensor, an infrared sensor, or a CO₂ sensor for cabin air quality, etc.

According to an example, the sensor unit 150 may include a vehicle speed sensor and an autonomous driving sensor.

The vehicle speed sensor may calculate the speed of the vehicle 10 in real time and deliver it to the control device 100. For example, the vehicle speed sensor may perform speed measurement such as measuring wheel rotation speed of the vehicle 10, using speedometer data, or using a radar (e.g., Doppler radar or ground-speed radar, etc.).

The autonomous driving sensor may recognize the current position, etc., of the vehicle 10 and deliver it to the control device 100. For example, the autonomous driving sensor may include a GPS, a lidar (LiDAR), a radar, a camera, and an ultrasonic sensor (e.g., combined through sensor fusion for higher accuracy, etc.).

The driving unit 160 may include various components that provide driving force required for driving the vehicle 10 and control operations of the vehicle according to commands output from the control device 100. The driving unit 160 may be configured with devices that generate and transmit power of the vehicle, such as an engine, a motor, a transmission, and a wheel driving system, and controllers that control these devices (e.g., power electronics, torque controllers, or regenerative braking controllers, etc.), and through these components, acceleration, deceleration, and direction change of the vehicle 10 may be performed.

The driving unit 160 may be controlled to maintain driving safety by performing longitudinal control (acceleration and deceleration) and lateral control (lane keeping and lane changing) of the vehicle. For example, the driving unit 160 may receive commands from the control device 100 and adjust the output of a motor or adjust the rotation speed and direction of wheels so that the vehicle may follow a driving route (e.g., a navigation path, a dynamically updated reroute, or a platooning convoy route, etc.).

In addition, the driving unit 160 may include a brake system and may reduce the speed of the vehicle or stop the vehicle while driving (e.g., emergency braking, regenerative braking, or adaptive cruise control braking, etc.). The driving unit 160 may control the vehicle 10 through an electric motor in the case of an electric vehicle, or may control the vehicle 10 based on engine output in the case of an internal combustion engine vehicle (e.g., gasoline, diesel, or hybrid powertrains, etc.).

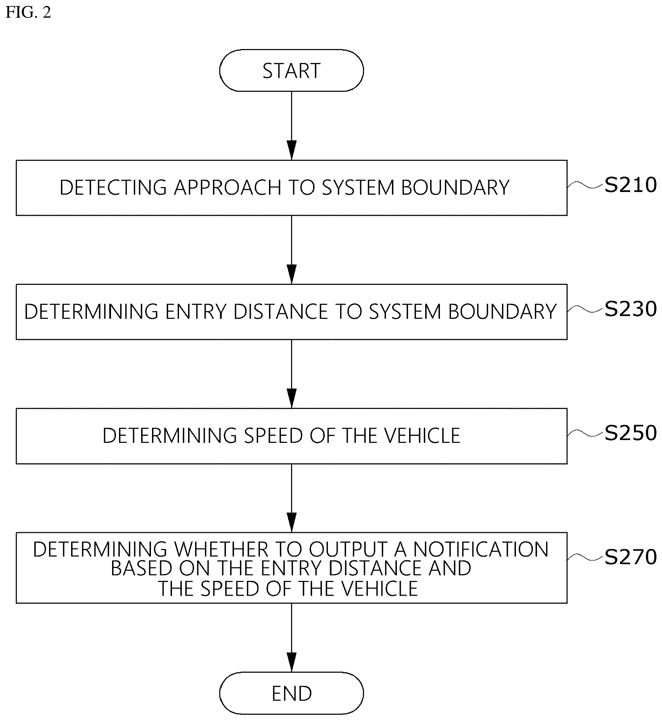

FIG. 2 shows an exemplary flowchart of notification output related to a system boundary according to an example of the present disclosure.

The control device 100 may identify an expected occurrence of a system boundary during driving control by an autonomous driving system (S210).

For example, the control device 100 may determine a possibility of entering the system boundary based on current location, speed, and driving route information, etc., of the vehicle 10. For this purpose, the control device 100 may detect a road condition, lane information, and limitation conditions of an autonomous driving function from the sensor unit 150 of the vehicle 10 and may determine an expected occurrence time of the system boundary (e.g., predicting a tunnel entrance, sharp curve, or roadwork zone, etc.).

In the detailed description of the present disclosure, a "System Boundary" may mean a verifiable or measurable specific operating condition or environmental limit, which is preset by a vehicle manufacturer or a system provider, for an autonomous driving system. A system boundary may be defined as a point or a section where the autonomous driving function of the vehicle goes beyond its designed scope and can no longer guarantee safe and effective operation. For example, a system boundary may be a point where a construction zone on a road, a complex intersection, a tunnel entrance, a road type not supported by the autonomous driving system, or specific weather conditions (e.g., heavy rain, heavy snow, fog, sandstorm, or icy roads, etc.) begin.

Next, the control device 100 may determine an entry distance to the system boundary (S230).

The control device 100 may calculate the distance that the vehicle 10 has to drive from the current position of the vehicle 10 until a moment when the corresponding autonomous driving function is terminated, as the entry distance.

Specifically, the control device 100 may determine the current position of the vehicle 10 using the sensor unit 150 or the communication unit 110. The position of the system boundary may be defined by a condition set by a manufacturer, and, for example, may be set as a destination of a navigation route, a starting point of a road section where autonomous driving is not possible (e.g., a construction zone, a highway exit, or a toll booth, etc.), or a specific boundary. The position where such a system boundary occurs and the corresponding entry distance may be determined or calculated based on information provided through an in-vehicle navigation system or external map data (e.g., HD maps or real-time traffic feeds, etc.).

Thereafter, the control device 100 may calculate the remaining distance to the system boundary based on the driving route of the vehicle 10. The driving route may be calculated based on road information from the current position to the system boundary (e.g., considering detours, lane restrictions, or route diversions, etc.).

In addition, the control device 100 may calculate the entry distance by considering conditions necessary for the corresponding autonomous driving function to be terminated. For example, in a case where the autonomous driving function does not operate below a specific speed or is terminated when approaching a complex intersection, the control device 100 may calculate the entry distance according to these conditions (e.g., minimum operational speed thresholds, multi-lane merging zones, or roundabouts, etc.).

The control device 100 may determine the speed of the vehicle 10 (S250).

The control device 100 may calculate the current speed by receiving data from the sensor unit 150 (e.g., a vehicle speed sensor, GPS-based velocity estimation, or inertial measurement unit, etc.). For example, the control device 100 may measure the driving speed based on the wheel rotation speed of the vehicle 10, or may detect the moving speed of the vehicle 10 using a radar or a camera (e.g., Doppler radar speed sensing or optical flow speed estimation, etc.).

Next, the control device 100 may determine whether to output a notification based on the entry distance to the system boundary and the current speed of the vehicle 10 (S270).

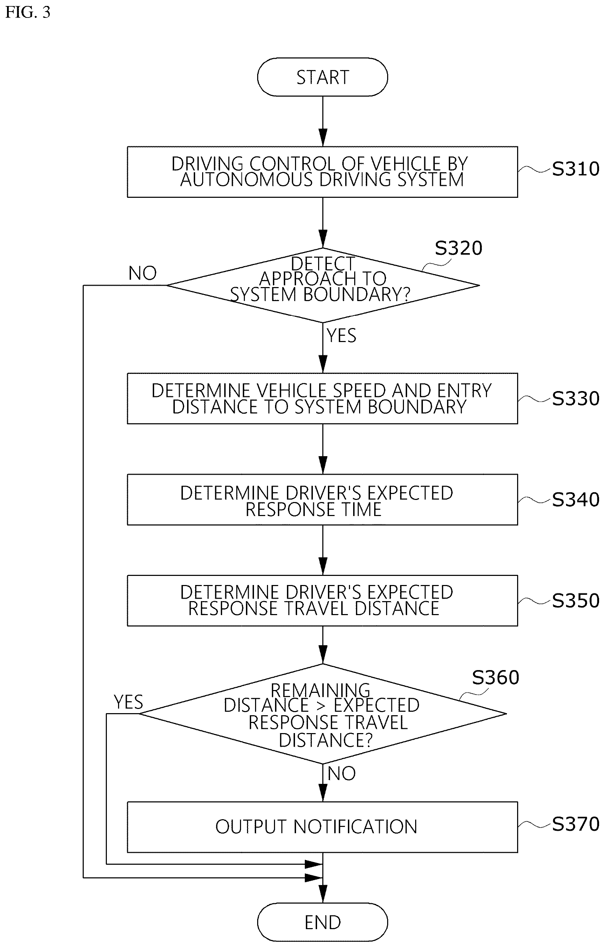

The control device 100 may calculate a driver's expected response travel distance based on the speed of the vehicle 10 and the driver's expected response time, and may determine whether to output the notification based on the determined entry distance and the calculated expected response travel distance (e.g., adjusting warning timing earlier at highway speeds and later in low-speed urban driving, etc.). This will be described in detail below with reference to FIG. 3.

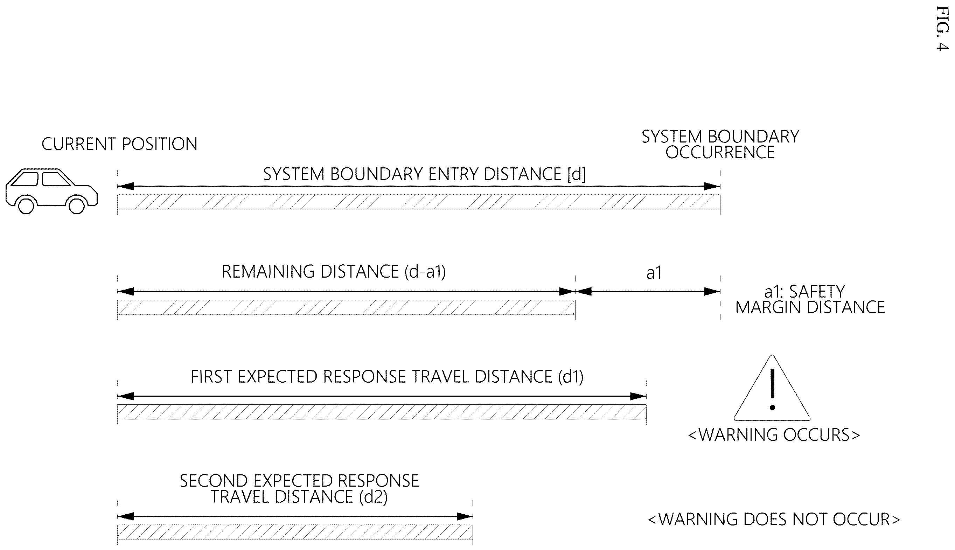

FIG. 3 shows an exemplary flowchart of a notification output related to a system boundary according to an example. For the description of FIG. 3, reference will be made to FIGS. 4 to 5. FIGS. 4 to 5 are diagrams illustrating examples of a notification output related to a system boundary according to various examples.

The control device 100 may control the driving of the vehicle 10 through the autonomous driving system (S310).

Specifically, the control device 100 may recognize a road condition, a traffic flow, a position of an obstacle, or a surrounding vehicle behavior (e.g., sudden braking, lane changes, or merging, etc.), through various sensors mounted on the vehicle 10 (e.g., a camera, a radar, a lidar, an ultrasonic sensor, or an inertial measurement unit, etc.). And, based on the recognized information, the control device 100 may control the driving of the vehicle 10 by generating longitudinal and lateral control commands including acceleration, deceleration, braking, and steering (e.g., adaptive cruise control, lane keeping, collision avoidance, or automated overtaking, etc.).

According to an example, the control device 100 may also control the vehicle 10 according to a navigation route to a specific destination (e.g., a user-set address, a charging station, or a fleet depot, etc.).

Next, the control device 100 may detect whether the vehicle 10 is approaching a system boundary (S320) (e.g., nearing a road construction area, a tunnel entrance, a complex intersection, a highway exit, or adverse weather conditions such as heavy fog or snow, etc.).

The control device 100 may continuously monitor a system boundary related to the corresponding autonomous driving function during autonomous driving of the vehicle 10. For example, the control device 100 may continuously check whether the vehicle 10 is approaching a system boundary or entering a section where the autonomous driving function is limited (e.g., an upcoming tunnel, a school zone, or an area with poor GNSS reception, etc.).

In a case where an expected occurrence of the system boundary is not detected (S320: No), the present operation may be terminated (e.g., when the vehicle continues driving on a highway segment fully supported by autonomous driving, or when no adverse road or weather condition is present, etc.).

On the other hand, in a case where an expected occurrence of the system boundary is detected (S320: Yes), the control device 100 may determine the speed of the vehicle and the entry distance to the system boundary (S330) (e.g., detecting that the vehicle is approaching a construction zone, a tunnel entrance, or an exit ramp where autonomous driving is limited, etc.).

For example, referring to FIG. 4, the control device 100 may determine the speed at the current position of the vehicle 10 that is currently being controlled by autonomous driving, and may determine the entry distance (d) to a position where an occurrence of the system boundary is detected (e.g., a lane closure, a construction area, or a sharp curve, etc.).

Referring again to FIG. 3, the control device 100 may determine a driver's expected response time (S340).

The expected response time may refer to an average time for a driver to recognize and respond to a notification outputted from the vehicle 10, and this may vary according to the driving situation of the vehicle 10 and the characteristics of the driver (e.g., level of driver attentiveness, driving experience, or cognitive load, etc.).

According to an example, the control device 100 may set a default value by referring to prestored expected response time data for each driver, or may dynamically adjust the expected response time according to the situation. For example, the expected response time may become shorter in the case of high-speed driving because a driver's attention level needs to be higher, and the expected response time may become longer in the case of low-speed driving or a congestion situation (e.g., heavy traffic, stop-and-go driving, or urban intersections, etc.).

In addition, the control device 100 may calculate the expected response time by monitoring the state of the driver through the sensor unit 150. For example, it may reflect a change in the response time by analyzing gaze tracking data using a camera sensor that recognizes the driver's face, or through a system that detects a fatigue state (e.g., eyelid closure rate, head nodding, or steering wheel grip looseness, etc.).

Next, the control device 100 may calculate a driver's expected response travel distance (S350).

The expected response travel distance may refer to a distance that the vehicle 10 is expected to travel until a driver recognizes and responds to a notification, and may be calculated based on the driver's expected response time and the current speed of the vehicle 10 (e.g., a shorter distance during low-speed city driving, a medium distance during suburban driving, or a longer distance during highway driving, etc.).

Specifically, the control device 100 may calculate the expected response travel distance by multiplying the driver's expected response time determined in the previous step (S340) with the current speed of the vehicle 10 (e.g., 1.5 seconds × 15 m/s = 22.5 m, 2 seconds × 30 m/s = 60 m, or 3 seconds × 40 m/s = 120 m, etc.). For example, if the driver's expected response time is 2 seconds and the speed of the vehicle 10 is 20 m/s, the expected response travel distance may be calculated as 40m. Such an expected response travel distance may be dynamically changed according to the speed of the vehicle 10 (e.g., 10 m at 5 m/s in a parking lot, 100 m at 50 m/s on a highway, or 20 m at 10 m/s in city traffic, etc.).

Next, the control device 100 may determine whether a remaining distance, which is an entry distance to a system boundary minus a predetermined distance, is greater than or equal to an expected response travel distance (S360) (e.g., comparing whether 150 m of remaining road before a tunnel, after subtracting a 20 m safety buffer, is sufficient for a driver's expected response travel distance of 100 m, etc.).

The control device 100 may calculate the remaining distance by subtracting a preset predetermined distance from the entry distance to the system boundary calculated in the previous step (e.g., subtracting a 20 m buffer from a 150 m entry distance to yield a 130 m remaining distance, etc.).

The predetermined distance may be interpreted as a minimum margin of distance necessary for a driver to respond after recognizing a notification and to switch vehicle control, which is set to secure the safety of the system. For example, the predetermined distance may be preset by considering the braking performance of the vehicle, a road condition, and an expected environmental change (e.g., wet or icy roads, vehicle load, tire condition, or road gradient, etc.).

The control device 100 may determine whether the remaining distance exceeds the expected response travel distance by comparing the remaining distance and the expected response travel distance (e.g., confirming that a 130 m margin is larger than an 80 m response distance, etc.).

In a case where the remaining distance exceeds the expected response travel distance (S360: Yes), because it is determined that the driver has sufficient time to respond to the system boundary approach, the control device 100 does not output a notification, and the operation of FIG. 3 may be terminated (e.g., when approaching a highway exit far ahead or a tunnel several hundred meters away, etc.).

Conversely, in a case where the remaining distance is less than or equal to the expected response travel distance, because there is a high possibility that the driver needs to respond immediately, the control device 100 may be configured to output a notification (S370) (e.g., issuing an urgent takeover alert when approaching a sudden construction zone, lane drop, or accident site, etc.).

Referring to FIG. 4, a remaining distance (d-a1) is illustrated, which is obtained by excluding a safety margin distance (a1), which is a predetermined distance, from an entry distance (d) to a system boundary. The remaining distance (d-a1) represents a margin of distance in which a driver may appropriately control the vehicle 10 after recognizing a notification and before the autonomous driving system is terminated (e.g., giving the driver 100 m to react before automated lane keeping disengages, etc.). Based on this, the control device 100 may determine whether to output a notification by comparing the remaining distance (d-a1) and an expected response travel distance.

In addition, a first expected response travel distance (d1) and a second expected response travel distance (d2) are illustrated in FIG. 4. The first expected response travel distance (d1) is a distance calculated, for example, while the vehicle 10 is driving at a high speed, and may represent a situation where a driver has to drive a greater distance until recognizing and reacting to a notification due to the high vehicle speed (e.g., 120 m at 40 m/s with a 3-second response time, etc.). On the other hand, the second expected response travel distance (d2) is a distance calculated, for example, during low-speed driving, and may represent a situation where the travel distance required for a driver to react is relatively short due to the low vehicle speed (e.g., 15 m at 5 m/s with a 3-second response time, etc.).

Because the first expected response travel distance (d1) exceeds the remaining distance (d-a1), the control device 100 may output a notification (e.g., a visual warning icon, an auditory alert tone, or a haptic steering wheel vibration, etc.).

Specifically, in a case where the first expected response travel distance (dl) exceeds the remaining distance (d-a1), it may be determined that there is a possibility that a driver may not sufficiently respond to the system boundary approach. In this case, the control device 100 may inform the driver of the system boundary approach by outputting a notification such as a warning through the input/output interface 140 (e.g., displaying "Take Over Now" on a dashboard screen, sounding a buzzer, or vibrating the seat, etc.).

Conversely, in a case where the second expected response travel distance (d2) is less than or equal to the remaining distance (d-a1), it may be determined that the driver has sufficient time to respond to the system boundary. Therefore, the control device 100 may not output an unnecessary notification. Through this, the unnecessary burden on the driver may be reduced and the efficiency of the system may be increased (e.g., preventing false alarms while driving slowly in urban traffic, etc.).

Through examples such as the above, the control device 100 may dynamically determine whether to output a notification by reflecting a change in the expected response travel distance according to the vehicle speed and the situation (e.g., adapting to differences between highway cruising, suburban driving, and stop-and-go congestion, etc.).

According to an example, in a case where vehicle congestion is identified on an autonomous driving route to a destination, the control device 100 may determine whether to output the notification by comparing a distance, obtained by subtracting a congestion distance and the safety distance from the entry distance to the system boundary, with the calculated expected response travel distance (e.g., adjusting takeover timing earlier when heavy traffic shortens maneuvering space, etc.).

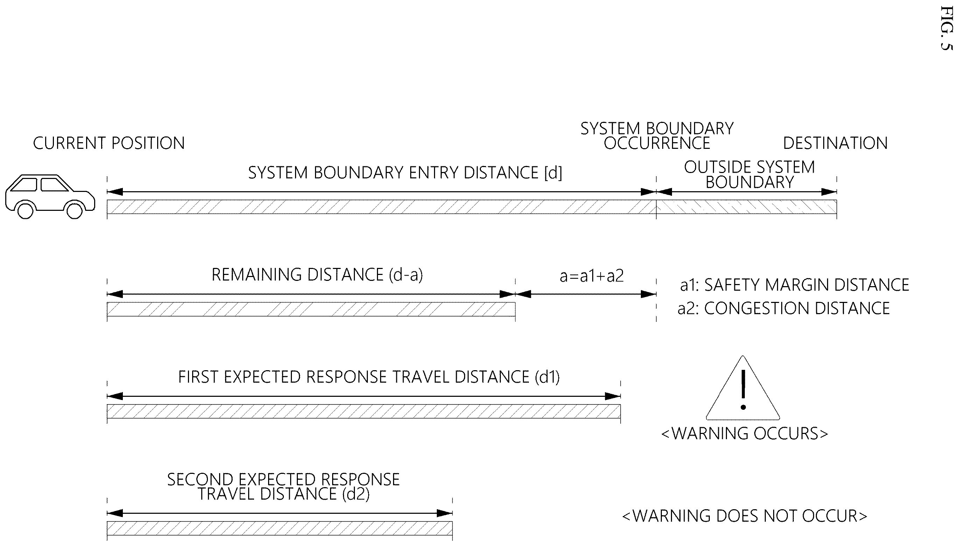

For example, referring to FIG. 5, the control device 100 may identify an event in which other vehicles are congested on an autonomous driving route to a destination.

The control device 100 may identify a vehicle congestion section based on traffic information data located on the route of the vehicle 10 or a density of surrounding vehicles during driving of the vehicle 10. For example, the control device 100 may identify a section in which the vehicle flow has slowed to a certain speed or below as a congestion section by using real-time traffic data collected through external sensors (e.g., a radar, a camera, a lidar, or a V2X communication module, etc.) or a communication module of the vehicle 10.

In this case, a remaining distance (d-a), from which not only the safety margin distance (a1) but also the congestion distance (a2) is additionally excluded from the entry distance (d) to the system boundary occurrence, may be calculated. Such a remaining distance of FIG. 5 may represent a substantial drivable distance, on a route including a congested section, in which a driver may recognize a notification, react, and perform vehicle control (e.g., slowing down in bumper-to-bumper traffic, merging into an open lane, or preparing for a lane change, etc.).

According to an example, a notification may be implemented in a visual, auditory, or haptic form of vibration. For example, a visual notification may be displayed in the form of a warning icon, a flashing signal, or a text message on an instrument panel, a head-up display (HUD), or a central display screen inside the vehicle 10 (e.g., a red takeover symbol, a blinking steering icon, or a pop-up message, etc.). The text message, for example, may be outputted in forms such as "The driver assistance function will be interrupted soon", "Please drive directly", "Please take control now," or "The driver assistance function has been deactivated".

An auditory notification may be implemented in a manner of outputting various warning sounds through a speaker, or delivering a specific warning message through a voice guidance system inside the vehicle 10. For example, the control device 100 may output a warning sound that gradually increases in intensity as the vehicle 10 approaches the system boundary, or may provide guidance of the aforementioned text message by voice (e.g., "System limit ahead, prepare to drive manually," etc.).

A haptic notification may be provided in the form of a vibration that a driver may directly feel. For example, the control device 100 may output a notification using a vibration motor embedded in a steering wheel or a driver's seat (e.g., pulsed steering wheel vibration, seat base vibration, or pedal vibration, etc.). According to an example, the control device 100 may gradually increase the vibration intensity as the vehicle 10 gets closer to a system boundary, or may output a specific pattern of vibration to reflect an urgency of the warning (e.g., rapid pulses for immediate takeover vs. slow pulses for early warning, etc.).

Furthermore, the notification is not limited to being outputted in only one manner, and may be provided in a combination of two or more forms according to the situation (e.g., simultaneous visual and auditory alerts, or combined auditory and haptic feedback, etc.).

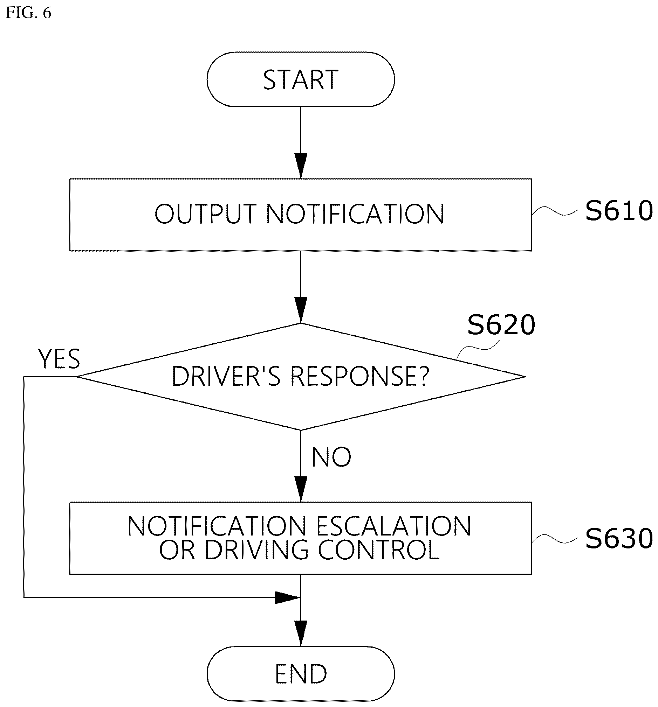

FIG. 6 shows an exemplary flowchart of an operation for controlling a notification or driving after a notification output according to an example of the present disclosure.

The control device 100 may output a notification according to the aforementioned examples of FIGS. 2 to 5 (S610) (e.g., a flashing takeover icon on a display, a spoken voice alert, or a vibrating steering wheel, etc.). Thereafter, the control device 100 may determine whether a driver responds to the outputted notification (S620) (e.g., by detecting braking input, steering wheel movement, accelerator pedal press, or a manual deactivation of the autonomous driving mode, etc.).

The driver's response may be detected in various manners according to a condition set by the system. For example, an override input, in which the driver deactivates the autonomous driving mode by operating an input device of the vehicle or switches vehicle control to manual by pressing a brake pedal, may be considered as a response (e.g., applying accelerator input, turning the steering wheel, or pressing a clutch in a manual transmission, etc.).

If the driver's response is identified (S620: Yes), the control device 100 may hand over vehicle control to the driver, or may terminate the operation of FIG. 6. For example, when an input from the driver is received after the notification is outputted, the control device 100 may terminate the driving control of the vehicle 10 by the system (e.g., disengaging lane keeping, adaptive cruise, or full autonomous mode, etc.).

In contrast, in a case where a driver's response is not identified for a predetermined period of time after the notification output (S620: No), the control device 100 may escalate the notification or control the driving of the vehicle 10 (S630) (e.g., upgrading from visual to auditory alert, intensifying haptic vibration, or initiating a minimum risk maneuver such as controlled deceleration, etc.).

According to an example, the control device 100 may stepwise output one or more additional notifications of a different form from the notification after the notification output. For example, the control device 100 may output a visual notification (e.g., a warning message, a flashing takeover icon, or a head-up display alert, etc.) as an initial notification, and then, in a case where a driver's response is not identified, may output an auditory notification (e.g., a warning sound that gradually increases in volume, a spoken takeover request, or a multi-tone chime, etc.). If there is still no response from the driver thereafter, the control device 100 may additionally output a tactile notification (e.g., vibration of the steering wheel or seat, or pedal vibration, etc.) to induce the driver's immediate attention.

According to an example, the control device 100 may stepwise output one or more additional notifications of a different intensity from the notification after the notification output. For example, the control device 100 may initially output a warning sound of a low volume or a simple tone, and thereafter, may gradually increase the volume or output a complex warning sound with multiple tones (e.g., alternating high-pitch and low-pitch signals, escalating pulse patterns, or surround-sound alerts, etc.).

According to an example, the control device 100 may control the braking of the vehicle if there is no response from a driver for a predetermined period of time. For example, the control device 100 may control the braking to decelerate the vehicle 10, or may control the driving of the vehicle 10 in at least one manner selected from stopping within a lane or stopping after a lane change (e.g., moving to a highway shoulder, an emergency bay, or a rest area, etc.).

For example, in a case where a non-response from a driver is detected, the control device 100 may gradually decelerate the vehicle speed by activating the braking system of the vehicle 10 (e.g., reducing speed from 100 km/h to 60 km/h, then to 30 km/h, before stopping, etc.).

Furthermore, in addition to deceleration, the control device 100 may perform control to stop the vehicle 10 within a lane. For example, in a case where a condition for the vehicle 10 to stop safely in the current lane is satisfied, the control device 100 may stop the vehicle 10 and provide a warning signal to surrounding vehicles by activating emergency lights (e.g., hazard flashers, brake light blinking, or horn activation, etc.).

In addition, the control device 100 may stop the vehicle 10 after moving to a safe lane by monitoring the movement of surrounding vehicles. For this purpose, the control device 100 may detect the position and speed of surrounding vehicles using the sensor unit 150 such as a radar and a camera, and may search for a section where a lane change is possible in real time (e.g., detecting an empty shoulder, an open adjacent lane, or a deceleration lane, etc.).

The control of the vehicle 10 as described above may be performed in a single manner or may be applied complexly according to the situation. For example, in a case where the vehicle 10 is driving at a high speed, the control device 100 may first execute deceleration, and thereafter, may stepwise perform stopping within a lane or stopping after a lane change (e.g., slowing down from highway speed, shifting into a safe lane, and then performing a controlled stop, etc.).

Through an example such as that of FIG. 6, the control device 100 may dynamically manage the notification state or the driving state of the vehicle 10 according to whether a driver responds (e.g., continuing autonomous control if takeover is confirmed, or escalating emergency maneuvers if not, etc.).

In a case where the vehicle reaches a system boundary, the control device 100 may automatically deactivate the autonomous driving mode of the vehicle and may request an immediate transfer of vehicle control authority to the driver. At this time, until a driver's input is detected, the autonomous driving system may prevent an accident by performing emergency control for a certain period of time, such as deceleration of the vehicle, stopping within a lane, or stopping after a lane change to a safe place (e.g., pulling onto a highway shoulder, stopping before a tunnel entrance, or halting near an emergency stop zone, etc.).

In addition, the control device 100 may inform surrounding vehicles and pedestrians that the vehicle is in an emergency state by activating emergency lights or warning lights of the vehicle (e.g., hazard warning flashers, external speakers, or connected V2X broadcast alerts, etc.).

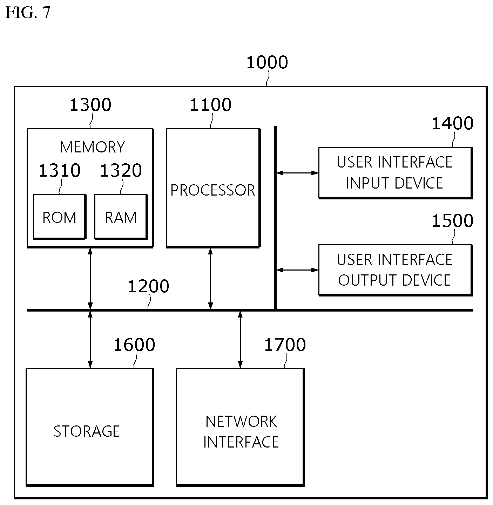

FIG. 7 shows an example computing system (e.g., a computing device of a vehicle or any other apparatus). One or more controllers, processors, etc. described herein, such as one or more components of the vehicle 10 and any other components and devices disclosed herein, may be implemented by or in the computing system as shown in FIG. 7.

A computing system 1000 may include at least one processor 1100, memory 1300, a user interface input device 1400, a user interface output device 1500, a storage 1600, and a network interface 1700, which are connected with each other via a bus 1200.

The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read-only memory (ROM) and a random-access memory (RAM).

Communication interface(s) (also referred to as communication device(s), communicator(s), communication module(s), communication unit(s), etc.), such as the network interface 1700, may allow software and/or data to be transferred between a device and one or more external devices, and/or between one or more components of a device. Communication interface(s) may include a receiver, a transmitter, a transceiver, a modem, a network interface and/or adapter (such as an Ethernet adapter), a radio transceiver, an antenna, a communication port, a Personal Computer Memory Card International Association (PCMCIA) slot and card, or the like. Software and data transferred via communication interface(s) may be in the form of signals, which may be electronic, electromagnetic, optical, infrared, or other signals capable of being received by communication interface(s). These signals may be provided to communication interface(s) via a communication path of a device, which may be implemented using, for example, wire or cable, fiber optics, a cellular link, a radio frequency (RF) link and/or other communications channels. Communication interface(s) may communicate using one or more communication protocols, such as Ethernet, Wi-Fi, near-field communication (NFC), Infrared Data Association (IrDA), Bluetooth, Bluetooth low energy (BLE), Zigbee, Long-Term Evolution (LTE), 5G New Radio (NR), vehicle-to-everything (V2X), a controller area network (CAN), or a local interconnect network (LIN), etc.

Accordingly, the operations of the method or algorithm described in connection with example example(s) disclosed in the specification may be directly implemented with a hardware module, a software module, or a combination of the hardware module and the software module, which is executed by the processor 1100. The software module may reside on a storage medium (e.g., the memory 1300 and/or the storage 1600) such as RAM, a flash memory, ROM, an erasable and programmable ROM (EPROM), an electrically EPROM (EEPROM), a register, a hard disk drive, a removable disc, or a compact disc-ROM (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

Through this, the present disclosure provides a sufficient opportunity for a driver to respond before and after the vehicle reaches a system boundary, and may allow the vehicle to effectively maintain safety even in a situation where the autonomous driving system can no longer operate safely.

A control device according to an example of the present disclosure may comprise: a memory; and a processor electrically or adaptively coupled to the memory, wherein the processor may be configured to: determine an entry distance to a system boundary and a speed of a vehicle, based on a determination that the vehicle is approaching the system boundary during driving control by an autonomous driving system; and determine whether to output a notification based on the entry distance and the speed of the vehicle.

In the control device according to some examples of the present disclosure, the processor may determine a driver's expected response travel distance based on the speed of the vehicle and a driver's expected response time; and determine whether to output the notification based on the determined entry distance and the determined driver's expected response travel distance.

In the control device according to some examples of the present disclosure, the processor may be configured to output the notification if a remaining distance, which is obtained by subtracting a predetermined safety distance from the entry distance, is less than or equal to the determined expected response travel distance.

In the control device according to some examples of the present disclosure, the processor may be configured not to output the notification if a distance, obtained by subtracting a predetermined distance from the entry distance, exceeds the determined expected response travel distance.

In the control device according to some examples of the present disclosure, the processor may determine whether to output the notification by comparing a distance, obtained by subtracting a congestion distance and a safety distance from the entry distance, with the determined expected response travel distance, if vehicle congestion is identified on an autonomous driving route to a destination.

In the control device according to some examples of the present disclosure, the processor may be configured to, after outputting the notification, stepwise output one or more additional notifications having a form different from that of the notification.

In the control device according to some examples of the present disclosure, the processor may be configured to, after outputting the notification, stepwise output one or more additional notifications having an intensity different from that of the notification.

In the control device according to some examples of the present disclosure, the processor may be configured to terminate the driving control of the vehicle in response to a predetermined driver's response to the notification.

In the control device according to some examples of the present disclosure, the predetermined driver's response may comprise at least one of an input for disengaging the autonomous driving and a braking input.

In the control device according to some examples of the present disclosure, the processor may be configured to control the braking of the vehicle in response to detecting a non-response from a driver for a predetermined period of time after the notification is output.

In the control device according to some examples of the present disclosure, the processor may be configured to control the braking of the vehicle by performing at least one of decelerating the vehicle, stopping the vehicle within a lane, or stopping the vehicle after a lane change.

A control method according to an example of the present disclosure may comprise: determining, based on a determination that a vehicle is approaching a system boundary during driving control by an autonomous driving system, an entry distance to the system boundary and a speed of the vehicle; and determining whether to output a notification based on the entry distance and the speed of the vehicle.

In the control method according to some examples, the determining whether to output the notification may comprise: determining a driver's expected response travel distance based on the speed of the vehicle and a driver's expected response time; and determining whether to output the notification based on the determined entry distance and the determined driver's expected response travel distance.

In the control method according to some examples, the determining whether to output the notification may comprise outputting the notification if a remaining distance, which is obtained by subtracting a predetermined safety distance from the entry distance, is less than or equal to the determined expected response travel distance.

In the control method according to some examples, the determining whether to output the notification may comprise not outputting the notification if a distance, obtained by subtracting a predetermined distance from the entry distance, exceeds the determined expected response travel distance.

The control method according to some examples may further comprise stepwise outputting, after outputting the notification, one or more additional notifications having a form different from that of the notification.

The control method according to some examples may further comprise stepwise outputting, after outputting the notification, one or more additional notifications having an intensity different from that of the notification.

The control method according to some examples may further comprise terminating the driving control of the vehicle in response to a predetermined driver's response to the notification.

In the control method according to some examples, the predetermined driver's response may comprise at least one of an input for disengaging the autonomous driving and a braking input.

The control method according to some examples may further comprise controlling the braking of the vehicle in response to detecting a non-response from a driver for a predetermined period of time after the notification is output.

According to an example of the present disclosure, by analyzing the speed of the vehicle and the entry distance to the system boundary and providing a dynamic notification to the driver, the driver may secure sufficient time to respond to the system boundary.

Although the preferred examples of the present disclosure have been described above, it will be understood by one skilled in the art to which the technology pertains that the present disclosure may be variously modified and changed within a scope that does not depart from the spirit and scope of the present disclosure described in the following claims.

## Claims

1. An apparatus of a vehicle, the apparatus comprising:
a sensor;
a processor; and
a memory storing at least one instruction that, when executed by the processor communicating with the memory, is configured to cause the apparatus to:
based on sensor data obtained from the sensor during autonomous driving of the vehicle, detect that the vehicle is approaching a system boundary at which the autonomous driving of the vehicle is limited,
determine, based on the detection, an entry distance to the system boundary and a speed of the vehicle,
generate, based on the determined entry distance and the determined speed of the vehicle, a signal indicating whether to output a notification to a driver of the vehicle, and
adjust, based on the signal, the autonomous driving of the vehicle.

2. The apparatus of claim 1, wherein the at least one instruction, when executed by the processor communicating with the memory, is configured to cause the apparatus to:
based on the determined speed of the vehicle and an expected response time of the driver, determine an expected response travel distance of the driver; and
based on the determined entry distance and the determined expected response travel distance, determine whether to output the notification.

3. The apparatus of claim 2, wherein the at least one instruction, when executed by the processor communicating with the memory, is configured to cause the apparatus to:
output the notification based on a remaining distance being less than or equal to the determined expected response travel distance, wherein the remaining distance is obtained by subtracting a predetermined safety distance from the determined entry distance.

4. The apparatus of claim 2 or 3, wherein the at least one instruction, when executed by the processor communicating with the memory, is configured to cause the apparatus to hold off outputting of the notification based on a remaining distance exceeding the determined expected response travel distance, wherein the remaining distance is obtained by subtracting a predetermined safety distance from the determined entry distance.

5. The apparatus of anyone of claims 2-4, wherein the at least one instruction, when executed by the processor communicating with the memory, is configured to cause the apparatus to, based on vehicle congestion being identified on an autonomous driving route according to a destination of the vehicle:
determine whether to output the notification by comparing a remaining distance with the determined expected response travel distance, wherein the remaining distance is obtained by subtracting a congestion distance and a safety distance from the determined entry distance.

6. The apparatus of anyone of claims 1-5, wherein the at least one instruction, when executed by the processor communicating with the memory, is configured to cause the apparatus to, after outputting the notification, stepwise output one or more additional notifications having a first form different from a second form of the notification.

7. The apparatus of anyone of claims 1-6, wherein the at least one instruction, when executed by the processor communicating with the memory, is configured to cause the apparatus to, after outputting the notification, stepwise output one or more additional notifications having a first intensity different from a second intensity of the notification.

8. The apparatus of anyone of claims 1-7, wherein the at least one instruction, when executed by the processor communicating with the memory, is configured to cause the apparatus to terminate autonomous driving of the vehicle based on a predetermined response of the driver to the notification, wherein, optionally, the predetermined response comprises at least one of an input for disengaging autonomous driving of the vehicle, or a braking input for braking the vehicle.

9. The apparatus of anyone of claims 1-8, wherein the at least one instruction, when executed by the processor communicating with the memory, is configured to cause the apparatus to control braking of the vehicle based on detecting a non-response from the driver for a predetermined period of time after the notification is output, wherein, optionally, the at least one instruction, when executed by the processor communicating with the memory, is configured to cause the apparatus to control the braking of the vehicle by performing at least one of:
decelerating the vehicle,
stopping the vehicle within a lane, or
stopping the vehicle after a lane change.

10. A method performed by an apparatus of a vehicle, the method comprising:
based on sensor data obtained from a sensor during autonomous driving of the vehicle, detecting that the vehicle is approaching a system boundary at which the autonomous driving of the vehicle is limited;
determining, based on the detecting, an entry distance to the system boundary and a speed of the vehicle; and
generating, based on the determined entry distance and the determined speed of the vehicle, a signal indicating whether to output a notification to a driver of the vehicle; and
adjusting, based on the signal, the autonomous driving of the vehicle.

11. The method of claim 10, wherein the generating of the signal indicating whether to output the notification comprises:
based on the determined speed of the vehicle and an expected response time of the driver, determining an expected response travel distance of the driver; and
based on the determined entry distance and the determined expected response travel distance, determining whether to output the notification,
wherein, optionally, the method further comprises:
outputting the notification based on a remaining distance being less than or equal to the determined expected response travel distance, wherein the remaining distance is obtained by subtracting a predetermined safety distance from the determined entry distance.

12. The method of claim 11, further comprising:
holding off outputting of the notification based on a remaining distance exceeding the determined expected response travel distance, wherein the remaining distance is obtained by subtracting a predetermined safety distance from the determined entry distance.

13. A vehicle comprising:
a sensor configured to detect information comprising a position of the vehicle and a speed of the vehicle;
a driving control circuit configured to control autonomous driving of the vehicle; and
a processor circuit configured to cause the vehicle to:
determine, based on the detected information:
an entry distance to a system boundary at which autonomous driving of the vehicle is limited, and
the speed of the vehicle,
obtain a driver response time associated with a driver of the vehicle, wherein the driver response time corresponds to a predicted time interval between a takeover request and the driver taking over autonomous driving of the vehicle,
determine a driver response distance as a product of the speed of the vehicle and the driver response time,
based on the entry distance being less than or equal to the driver response distance, output the takeover request to the driver, and
based on an absence of a driver response to the takeover request within a preset time threshold, activate, via the driving control circuit, a minimum risk maneuver operation during autonomous driving of the vehicle,
wherein, optionally, the processor circuit is configured to obtain the driver response time by at least one of:
retrieving a prestored default value,
referencing driver profile information, or
estimating the driver response time based on driver-monitoring sensor data, and wherein, optionally, the processor circuit is configured to output the takeover request in at least one of a visual form, an auditory form, or a haptic form.

14. The vehicle of claim 13, wherein the processor circuit is configured, based on the absence of the driver response, to activate the minimum risk maneuver operation by at least one of decelerating the vehicle, stopping the vehicle within a lane, or stopping the vehicle after a lane change.

15. The vehicle of claim 13 or 14, wherein the processor circuit is configured to:
after outputting of the takeover request in a first form, output the takeover request in a second form based on the driver response not being detected, and
after outputting of the takeover request in the second form, output the takeover request in a third form based on the driver response not being detected.
